Europäisches Patentamt

European Patent Office

Office européen des brevets

(19)

(11) Veröffentlichungsnummer: **0 302 250 B1**

(12) **EUROPÄISCHE PATENTSCHRIFT**

(45) Veröffentlichungstag der Patentschrift: **21.08.91**

(51) Int. Cl.⁵: **F16K 31/06**, B60T 8/36, B60T 8/32, B60T 15/14

(21) Anmeldenummer: **88110825.2**

(22) Anmeldetag: **07.07.88**

(54) **Magnetventil mit veränderbaren Durchflussmengen.**

(30) Priorität: **04.08.87 DE 3725810**

(43) Veröffentlichungstag der Anmeldung:
**08.02.89 Patentblatt 89/06**

(45) Bekanntmachung des Hinweises auf die
Patenterteilung:
**21.08.91 Patentblatt 91/34**

(84) Benannte Vertragsstaaten:
**DE FR IT SE**

(56) Entgegenhaltungen:
**DE-A- 2 403 523      DE-A- 2 403 770
DE-A- 2 647 072      DE-A- 2 714 091
DE-A- 3 534 665      DE-A- 3 621 492
DE-B- 2 138 182      US-A- 3 970 111**

(73) Patentinhaber: **ROBERT BOSCH GmbH
Postfach 10 60 50
W-7000 Stuttgart 10(DE)**

(72) Erfinder: **Käs, Günter
Markelsheimer Strasse 70
W-7000 Stuttgart 40(DE)**

## Beschreibung

Stand der Technik

Die Erfindung geht aus von einem Magnetventil nach der Gattung des Hauptanspruchs (siehe z.B die DE-A-24037700). Magnetventile sind in vielfachen Ausführungsformen und zur Durchführung mannigfaltiger Schaltfunktionen bekannt; sie umfassen üblicherweise ein Ventilgehäuse, einen in diesem beweglich gelagerten Anker, eine elektrische Erregerspule, um den Anker zu betätigen und im durch die Bewegung des Ankers gesteuerten Hydraulikteil den Ventilkörper, welcher den Sitz für das Dichtelement, beispielsweise eine Dichtkugel bildet, Verbindungsmittel, die das so gebildete Kugelventil an die Ankerbewegung koppeln sowie eine Vorspannungsfeder, die einen vorgegebenen Schaltzustand des Ventils bestimmt.

Im einfachsten Ausführungsfall kann es sich um sogenannte 2/2-Wegeventile handeln, also um ein Ventil mit einem Ventileinlaß und einem Ventilauslaß, welches in zwei Schaltstellungen bewegbar ist, nämlich in die Schließstellung des Ventils und in dessen Offenstellung. Gerade solche 2/2-Wegeventile werden häufig zur Realisierung von sogenannten ABS-Funktionen in die Bremleitungen bei Kraftfahrzeugen eingebaut; sie können in der Schließstellung die Zufuhr weiteren Druckmittels zu den Radbremszylindern unterbinden (Haltefunktion) und gegebenenfalls mit weiteren parallel wirkenden Magnetventilen auch einen Druckabfall ermöglichen, oder bei Überführung in die Offenstellung einen weiteren Druckaufbau zulassen.

Im folgenden wird auf Aufbau und Funktion eines solchen 2/2-Wege-Magnetventils zur Realisierung von ABS-Funktionen genauer eingegangen, da dies auch ein bevorzugtes An-wendungsgebiet bei vorliegender Erfindung ist. Da solche ABS-Magnetventile ständig in den Bremsleitungen (notwendigerweise) eingeschaltet bleiben, müssen sie für den häufigen Fall der Normalbremsung einen möglichst großen Durchflußquerschnitt anbieten, der aber bei der Realisierung von ABS-Funktionen nicht erwünscht ist, denn gerade im ABS-Fall ist es Ziel des Systems, in erster Linie den Bremsdruck zunächst abzusenken, um die Blokkierneigung zu beseitigen, dann gegebenenfalls zu halten, wieder (allmählich) aufzubauen und so fort im schnellen Wechsel der von einer zentralen Steueranlage aufgrund der Signale von Radsensoren ergehenden Befehle.

Da üblicherweise ein 2/2-Wegeventil nur entweder voll in die Offen- oder voll in die Schließstellung gefahren werden kann, wenn man von der Möglichkeit eines hier nochmals getakteten Betriebs zunächst absieht, würde daher ein normales 2/2-Wege-Magnetventil bei Eingehen des Steuerbefehls "Öffnen" voll in die Offenstellung mit dem für Normalbremsung gewünschten großen Durchflußquerschnitt übergehen, so daß es zu einem entsprechend steilen Druckanstieg in den Bremzylindern kommen würde. Dies ist für die ABS-Regelung häufig ungünstig - andererseits kann man aber mit einem kleineren Querschnitt für solche Ventile nicht arbeiten, um nicht bei einem erforderlich werdenden schnellen Abbremsen durch den drosselnden Durchfluß Zeit für den Druckaufbau zu verlieren.

Der Erfindung liegt daher die Aufgabe zugrunde, ein Magnetventil mit veränderbaren Durchflußmengen, insbesondere für den Einsatz im ABS-Betrieb, zu schaffen, welches keine gesonderten, von außen einwirkenden Umschaltmittel benötigt und bei vollständiger Beibehaltung eines gegebenen Grundaufbaus dann einen Übergang auf einen kleineren Durchflußquerschnitt ermöglicht, wenn sich ein Übergang in den ABS-Betrieb durch Ansteuerung seines Magnetteils ergibt.

Vorteile der Erfindung

Die Erfindung löst diese Aufgabe mit den kennzeichnenden Merkmalen des Hauptanspruchs und hat den Vorteil, daß ohne jede mechanische Änderung, auch ohne jede sonstige Einflußnahme bis auf die für den Übergang in den ABS-Betrieb ohnehin erforderliche Ansteuerung der Spule eine effektive Durchflußquerschnittreduzierung erzielt werden kann, die durch die sinnvolle Ausnutzung von bestimmten, im Bereich von Ventilsitz (Ventilkörper) und Dichtelement auftretenden Strömungsgegebenheiten möglich wird. Tatsächlich ergeben sich bei Ventilen, beispielsweise elektrohydraulischen Schaltventilen mit fluidischen Kugelelementen als Dichtelemente Strömungseffekte, die für sich gesehen als sogenanntes "hydrodynamisches Paradoxon" bekannt sind und die darin bestehen, daß das Dichtelement gegen die Einströmöffnung des Ventils angezogen wird.

Angesprochen ist dieses hydrodynamische Paradoxon beispielsweise in der Veröffentlichung "Untersuchungen an elektrohydraulischen Schaltventilen mit fluidischen Kugelelementen" von K.H. Post auf den Bereich des Ankerbodens bei einem praktisch ausgeführten Magnetventil überführt wird, zur Erzielung definierter Verhältnisse im Durchströmverhalten des Ventils.

Vorteilhaft ist daher bei vorliegender Erfindung, daß die Durchflußmengen-Umschaltung keine zusätzlichen Baukomponenten im Bereich des Magnetventils erforderlich macht und lediglich ein Rückhalteelement in einfacher Form, das beispielsweise ein Permanentmagnet oder eine Schnappfeder sein kann, für den Anker vorzusehen ist, um sicherzustellen, daß der Drosselungseffekt auf den Querschnitt sich bei einer Normalbremsung nicht auswirkt.

Durch die in den Unteransprüchen aufgeführten Maßnahmen sind vorteilhafte Weiterbildungen und Verbesserungen des im Hauptanspruch angegebenen Magnetventils möglich. Besonders vorteilhaft ist die Ausbildung des Rückhalteelements, welches den Einsatz des reduzierten Durchflußquerschnitts auf den ABS-Betrieb beschränkt hält, in Form eines Permanentmagneten, von welchem der Anker durch das Bestromen des Ventils (ABS-Funktion) sozusagen losgerissen wird und sich schließen kann.

Zeichnung

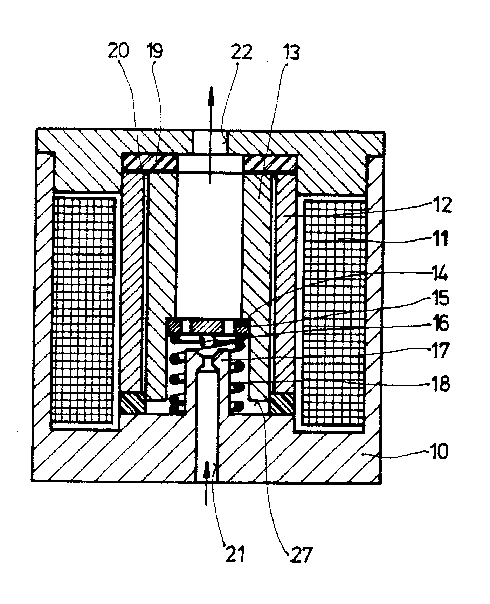

Ein Ausführungsbeispiel der Erfindung ist in der Zeichnung dargestellt, die eine schematisch vereinfachte Ausführung eines Magnetventils zeigt.

Die Erfindung geht aus von dem Wissen , daß gemäß dem sogenannten hydrodynamischen Paradoxon, das in dem Buch "Technische Strömungslehre" von Willi Bohl, 6. Auflage, Seiten 62, 63, Vogel-Buchverlag, Würzburg, beschrieben ist, bei bestimmten Hüben eines Ventils und bei bestimmten Durchflußmengen auf das in der Offenstellung des Ventils befindliche Dichtelement eine Ansaugwirkung zustande kommt, und beruht auf der Erkenntnis, daß unter entsprechender Gestaltung der sich als wirksam erweisenden Strömungseffekte die erreichte Ansaugwirkung für ein Magnetventil mit veränderbaren Durchflußmengen ausgenutzt werden kann, daß hierfür eine entsprechende Abstimmung der Gegebenheiten im Bereich des Ausströmquerschnitts des Ventils vorgenommen wird. Hierdurch kann die sich als ein Ansaugen durch Unterdruck ausgelöste Strömungskraft in das Gesamtverhalten des Ventils aufgenommen und eine Abstimmung der auf den Anker wirkenden Kräfte in Verbindung mit einem zusätzlichen Anker-Rückhalteelement in Richtung auf die Veränderbarkeit der Durchflußmenge realisiert werden.

Grundstruktur und Grundfunktion vorliegender Erfindung werden im folgenden anhand der Zeichnung erläutert.

Das Ventilgehäuse ist mit 10 bezeichnet; es ist topfartig ausgebildet und lagert in seinem Inneren die Erregerspule 11 sowie eine rohrförmige Ankerführung 12, in der der Anker 13 unter der Wirkung des von der Erregerspule 11 aufgebauten Magnetfelds eine Gleitverschiebung durchführt, die bei dem dargestellten Ausführungsbeispiel einer Schließbewegung des Ventils entspricht. Zu diesem Zweck nimmt der Anker 12 in einer Abschulterung 14 einen Dichtelementträger 15, beispielsweise in Form einer Lochscheibe auf, die das eigentliche Dichtelement 16 in Form einer Dichtkugel trägt. Dem Dichtelement 16 gegenüberliegend befindet sich der von einem Ventilkörper 17 gebildete Ventilsitz, bei dem dargestellten Ausführungsbeispiel umgeben von einer Rückstellfeder 18 für den Anker 13, wobei die Rückstellfeder sich jeweils am Dichtelementträger 15 und am Gehäuseboden des Ventils abstützt. Dieser Aufbau vervollständigt sich durch einen hier ringförmig ausgebildeten Dauermagneten 19 und einer Zwischenscheibe 20 aus nichtmagnetischem Material, die zwischen Anker 13 und dem Dauermagneten 19 einen Restluftspalt bildet. Der Ventileinlaß ist mit 21 und der Ventilauslaß mit 22 bezeichnet. Die Strömungsrichtung des von dem Magnet zu schaltenden Fluidums ist durch die Pfeile erkennbar.

Durch den sich bei solchen Kugelventilen ergebenden Grundsatz, daß die resultierende Strömungskraft des Druckmittels zumindest bei kurzen Hüben der Dichtkugel in Richtung "Ansaugen" wirkt, entwickelt die vorliegende Erfindung die hierdurch mögliche "Änderung des Durchflusses.

Es ergibt sich daher folgende Funktion. Zunächst wird durch den Einsatz des Rückhalteelements, also bei dem dargestellten Ausführungsbeispiel des Dauermagneten 19, welches aber auch eine Schnappfeder sein kann, erreicht, daß beim durch Bewegen des Bremspedals eingeleiteten Normalbremsen der Anker 13, in seiner Ausgangsposition in oberer Anlage in der Zeichenebene der Figur verbleibt, gehalten durch den Dauermagneten und bei stromloser Erregerspule 11. Setzen ABS-Funktionen ein, dann wird der Anker beim Bestromen des Ventils von dem Rückhalteelement losgerissen und das Ventil schließt sich in üblicher Weise. Das geschlossene Ventil sperrt dabei die Verbindung zwischen dem Hauptbremszylinder und den Radbremszylindern, deren Bremsdrücke zum Beenden von Radblockiergefahr mittels Absenkventilen abgesenkt werden.

Wird dann im Verlauf von sich ändernden ABS-Funktionen das Ventil zum (erneuten) Druckaufbau in diesen Radbremszylindern stromlos gesetzt, dann verhindert aufgrund der weiter vorn angegebenen Erläuterung das einströmende Medium über diesen Strömungseffekt den Anker am vollständigen Zurücklaufen, so daß sich gegenüber der Normalbremsung ein gedrosseltes Einströmen einstellt, welches gut in vorgegebenen Grenzen gehalten werden kann.

In einer Ausgestaltung der Erfindung kann dieser zunächst grundsätzlich gestaltete Ablauf durch elektrische Beschaltungsmaßnahmen am Ventil noch verstärkt werden, etwa indem zum Losreißen des Ankers aus der Ruhestellung (Offenstellung des Ventils) ein zeitlich begrenzter Stromüberschwinger eingesetzt wird und zur Unterstützung des Strömungseffekts der Anker durch Zuführung eines getakteten Ansteuerstroms zusätzlich daran gehindert wird, zu stark in die Offenstellung zurückzulaufen.

Es ergibt sich daher die Möglichkeit, durch das Rückhalteelement bei Normalbremsung das Ventil auf einen großen Durchflußquerschnitt einzustellen, so daß ein gewünschter Bremsdruck per Bremspedalbetätigung sehr schnell aufgebaut werden kann, während beim ABS-Betrieb das Rückhalteelement nicht wirksam ist und sich durch den Strömungseffekt eine gewollte Drosselung (Durchflußquerschnittsreduzierung) ergibt, die den Durchfluß über den Druckbereich im wesentlichen konstant hält, so daß sich günstige Bedingungen für die ABS-Regelung ergeben. Da übliche ABS-Ventile mit einer solchen "Änderung des Durchflusses versehen werden können, ergeben sich Kostenersparnisse gegenüber dem Einsatz separater Umschaltventile.

Alle in der Beschreibung, den nachfolgenden Ansprüchen und der Zeichnung dargestellten Merkmale können sowohl einzeln als auch in beliebiger Kombination miteinander erfindungswesentlich sein.

**Patentansprüche**

1.  Magnetventil mit veränderbaren Durchflußmengen, insbesondere Magnetventil für den Einsatz in Antiblockiersystemen (ABS) mit großem Durchflußquerschnitt für Normalbremsung und reduziertem Durchflußquerschnitt bei ABS-Betrieb, mit in einem Ventilgehäuse mit Steuerspule verschieblich gelagertem Anker, vom Anker bewegten Dichtelement und diesem zugeordneten, stationären Ventilsitz, dadurch gekennzeichnet, daß

    a) der Einströmbereich mit Dichtelement (16) und Dichtelementträger (15) und Ventilsitz (17) so ausgebildet ist, daß sich innerhalb bestimmter Hub- und Durchflußbereiche ein Ansaugeffekt durch das strömende Medium ergibt (hydrodynamisches Paradoxon), derart, daß das Dichtelement (16) gegen die Strömungsrichtung zum Ventileitz (17) hingezogen wird, wodurch eine Drosselwirkung entstellt und daß

    b) ein auf den Anker (13) wirkendes Rückhalteelement (Permanentmagnet 19, Schnappfeder) vorgesehen ist, welches bei elektrischer Ansteuerung des Magnetventils durch die Ankerbewegung überwunden wird.

2.  Magnetventil nach Anspruch 1, dadurch gekennzeichnet, daß in einer Abschulterung (14) des rohrförmigen Ankers eine den Dichtelementträger (15) bildende Lochscheibe gehalten ist, an der das Dichtelement (16) in Form einer Dichtkugel befestigt ist.

3.  Magnetventil nach Anspruch 1 oder 2, dadurch gekennzeichnet, daß

    a) der Ankerboden (27) mit dem Einströmbereich (Dichtelement 16, Dichtelementträger 15, Ventilkörper 17) über wenigstens einen Durchlaß verbunden ist, und daß

    b) die Ankerführung (12) den Anker (13) mit enger Spaltbildung so anliegend umgibt, daß sich an den axial einander gegenüberliegenden Ankerflächen aufgrund des Strömungseffekts des zu schaltenden Mediums (Bremsflüssigkeit) ein Druckgefälle ergibt, welches den Anker nach Abreißen von seinem Rückhalteelement bei aufrechterhaltenem Mediumfluß auf einen geringen Teilöffnungshub entsprechend einem reduzierten Durchflußquerschnitt hält.

4.  Magnetventil nach einem der Ansprüche 1 bis 3, dadurch gekennzeichnet, daß der der Steuerspule (11) zugeführte Ansteuerstrom für ABS-Betrieb einen variablen Stromüberschwinger enthält zur sicheren Ablösung des Ankers vom Rückhalteelement (Permanentmagnet 19).

5.  Magnetventil nach Anspruch 4, dadurch gekennzeichnet, daß zur Unterstützung der durch die auf den Ankerboden geleiteten Strömungseffekte bewirkten Durchflußreduzierung der Spulenansteuerstrom für die Ventiloffenstellung getaktet ist.

6.  Magnetventil mit veränderbaren Durchflußmengen, insbesondere Magnetventil für den Einsatz in Antiblockiersystemen (ABS) mit großem Durchflußquerschnitt für Normalbremsung und reduziertem Durchflußquerschnitt bei ABS-Betrieb, mit in einem Ventilgehäuse mit Steuerspule verschieblich gelagerten Anker, vom Anker bewegten Dichtelement und diesem zugeordneten stationären Ventilsitz, dadurch gekennzeichnet, daß

    a) der Ankerboden (27) mit dem Einströmbereich (Dichtelement 16, Dichtelementträger 15, Ventilkörper 17) über wenigstens einen Durchlaß verbunden ist, daß

    b) die Ankerführung (12) den Anker (13) mit enger Spaltbildung so anliegend umgibt, daß sich an den axial aneinander gegenüberliegenden Ankerflächen aufgrund des Strömungseffekts des zu schaltenden Mediums (Bremsflüssigkeit) ein Druckgefälle ergibt, welches den Anker nach Abreißen von seinem Rückhalteelement bei aufrechterhaltenem Mediumfluß auf einen Teilöffnungshub entsprechend einem reduzierten Durchflußquerschnitt hält.

7. Magnetventil nach Anspruch 6 mit veränderbaren Durchflußmengen, insbesondere Magnetventil für den Einsatz in Antiblockiersystemen (ABS) mit großem Durchflußquerschnitt für Normalbremsung und reduziertem Durchflußquerschnitt bei ABS-Betrieb, mit in einem Ventilgehäuse mit Steuerspule verschieblich gelagerten Anker, vom Anker bewegten Dichtelement und diesem zugeordneten, stationären Ventilsitz, dadurch gekennzeichnet, daß
    a) der Ankerboden (27) mit dem Einströmbereich (Dichtelement 16, Dichtelementträger 15, Ventilkörper 17) über wenigstens einen Durchlaß verbunden ist,
    b) die Ankerführung (12) den Anker (13) mit enger Spaltbildung so anliegend umgibt, daß sich an den axial einander gegenüberliegend Ankerflächen aufgrund des Strömungseffekts des zu schaltenden Mediums (Bremsflüssigkeit) ein Druckgefälle ergibt, welches den Anker nach Abreißen von seinem Rückhalteelement bei aufrechterhaltenen Medienfluß entgegen der Kraft einer Rückstellfeder (18) auf einem Teilöffnungshub entsprechend einem reduzierten Durchflußquerschnitt hält.

**Claims**

1. Electromagnetic valve with changeable flow quantities, in particular an electromagnetic valve for use in anti-lock brake systems (ABS) with a large flow area for normal braking and reduced flow area in the case of ABS operation, with an armature displaceably mounted in a valve housing with a control coil, a sealing element moved by the armature and a fixed valve seat assigned to said sealing element, characterised in that
    a) the inflow region with the sealing element (16) and the sealing-element carrier (15) and the valve seat (17) is designed in such a way that, within certain stroke and flow ranges, a suction effect is produced by the flowing medium (hydrodynamic paradoxon) such that the sealing element (16) is drawn towards the valve seat (17) against the direction of flow, a restricting effect thereby being produced, and in that
    b) a retaining element (permanent magnet 19, catch spring) acting on the armature (13) is provided, which is overcome by the armature movement upon electrical activation of the electromagnetic valve.

2. Electromagnetic valve according to Claim 1, characterised in that a perforated disc which forms the sealing-element carrier (15) and on which the sealing element (16) in the form of a sealing sphere is secured is held in a shouldered portion (14) of the tubular armature.

3. Electromagnetic valve according to Claim 1 or 2, characterised in that
    a) the armature base (27) is connected to the inflow region (sealing element 16, sealing-element carrier 15, valve body 17) via at least one passage, and in that
    b) the armature guide (12) surrounds the armature (13) so closely, with the formation of a narrow gap, that a pressure drop is produced at the axially mutually opposite armature faces due to the flow effect of the medium (brake fluid) to be controlled, said pressure drop holding the armature, after it has been dragged away from its retaining element, at a small partial opening stroke corresponding to a reduced flow area while the medium flow is maintained.

4. Electromagnetic valve according to one of Claims 1 to 3, characterised in that the activating current for ABS operation fed to the control coil (11) contains a variable current overshoot for the reliable release of the armature from the retaining element (permanent magnet 19).

5. Electromagnetic valve according to Claim 4, characterised in that, to assist the flow reduction brought about by the flow effects directed at the armature base, the coil-activating current for the open position of the valve is synchronized.

6. Electromagnetic valve with changeable flow quantities, in particular an electromagnetic valve for use in anti-lock brake systems (ABS) with a large flow area for normal braking and reduced flow area in the case of ABS, operation, with an armature displaceably mounted in a valve housing with a control coil, a sealing element moved by the armature and a fixed valve seat assigned to said sealing element, characterised in that
    a) the armature base (27) is connected to the inflow region (sealing element 16, sealing-element carrier 15, valve body 17) via at least one passage, and in that
    b) the armature guide (12) surrounds the armature (13) so closely, with the formation of a narrow gap, that a pressure drop is produced at the axially mutually opposite armature faces due to the flow effect of the medium (brake fluid) to be controlled, said pressure drop holding the armature, after it has been dragged away from its retaining element, at a partial opening stroke corresponding to a reduced flow area while the medium flow is maintained.

7. Electromagnetic valve with changeable flow quantities, in particular an electromagnetic valve for use in anti-lock brake systems (ABS) with a large flow area for normal braking and reduced flow area in the case of ABS operation, with an armature displaceably mounted in a valve housing with a control coil, a sealing element moved by the armature and a fixed valve seat assigned to said sealing element, characterised in that

   a) the armature base (27) is connected to the inflow region (sealing element 16, sealing-element carrier 15, valve body 17) via at least one passage and

   b) the armature guide (12) surrounds the armature (13) so closely, with the formation of a narrow gap, that a pressure drop is produced at the axially mutually opposite armature faces due to the flow effect of the medium (brake fluid) to be controlled, said pressure drop holding the armature, after it has been dragged away from its retaining element, at a partial opening stroke corresponding to a reduced flow area counter to the force of a return spring (18) while the medium flow is maintained.

## Revendications

1. Valve magnétique avec des coefficients de débit susceptibles d'être modifiés, notamment valve magnétique pour la mise en oeuvre des systèmes antiblocage (ABS) avec une grande section transversale de passage pour le freinage normal et une section transversale de passage réduite pour le fonctionnement ABS, avec dans un boîtier de valve une armature montée de façon à pouvoir coulisser grâce à une bobine de commande, un élément d'étanchéité déplacé par l'armature et associé à celle-ci, un siège de valve fixe, valve magnétique caractérisée en ce que :

   a) la zone d'admission avec l'élément d'étanchéité (16) et le support d'élément d'étanchéité (15) ainsi que le siège de soupape (17) est constituée de façon telle qu'entre des limites déterminées de course et de débit, il se produit, du fait de la circulation du fluide, un effet d'aspiration (paradoxe hydrodynamique), si bien que l'élément d'étanchéité (16) est tiré en sens inverse de l'écoulement vers le siège de valve (17), ce qui produit un effet d'étranglement,

   b) il est prévu un élément de retenue (aimant permanent 19, ressort à déclic) agissant sur l'armature (13) et dont l'action est surmontée par le déplacement de l'armature lorsque la valve magnétique est commandée électriquement.

2. Valve magnétique selon la revendication 1, caractérisée en ce que dans un épaulement (14) de l'armature tubulaire est maintenu un disque perforé constituant le support (15) de l'élément d'étanchéité, et sur lequel est fixé l'élément d'étanchéité (16) en forme de bille.

3. Valve magnétique selon la revendication 1 ou la revendication 2, caractérisée en ce que :

   a) le fond (27) de l'armature est relié par l'intermédiaire d'au moins un passage à la zone d'admission (élément d'étanchéité 16, support 15 de l'élément d'étanchéité, corps de valve 17),

   b) le guidage (12) de l'armature entoure cette armature (13) en s'y appliquant avec un jeu réduit, si bien que du fait de l'effet d'écoulement du fluide à mettre en circulation (liquide de freinage), il se produit sur les faces axialement opposées l'une à l'autre de l'armature, une chute de pression, qui, après que l'armature ait été arrachée de son élément de retenue, maintient cette armature, tant que l'écoulement du fluide est maintenu, à une course d'ouverture partielle réduite correspondant à une section transversale de passage réduite.

4. Valve magnétique selon une des revendications 1 à 3, caractérisée en ce que le courant de commande amené à la bobine de commande (11) pour le fonctionnement (ABS) présente une sur-oscillation variable pour détacher, de façon certaine, l'armature de l'élément de retenue (aimant permanent 19).

5. Valve magnétique selon la revendication 4, caractérisée en ce que, pour seconder la réduction de débit provoquée par les effets d'écoulement induits sur le fond de l'armature, le courant de commande de la bobine est synchronisé pour la position d'ouverture de la valve.

6. Valve magnétique avec des coefficients de débit susceptibles d'être modifiés, notamment valve magnétique destinée à être mise en oeuvre dans des systèmes anti-blocage (ABS), avec une grande section transversale de passage pour le freinage normal et une section transversale de passage réduite pour le fonctionnement ABS, avec une armature montée dans un boîtier de valve de façon à pouvoir être déplacée par une bobine de commande, avec un élément d'étanchéité déplacé par l'armature et associé à celle-ci, et un siège de valve fixe, valve magnétique caractérisée en ce que :

a) le fond (27) de l'armature est relié par l'intermédiaire d'au moins un passage à la zone d'admission (élément d'étanchéité 16, support 15 de l'élément d'étanchéité, corps de valve 17),

b) le guidage (12) de l'armature entoure cette armature (13) en s'y appliquant avec un jeu réduit, si bien que du fait de l'effet d'écoulement du fluide à mettre en circulation (liquide de freinage) il se produit sur les faces axialement opposées l'une à l'autre de l'armature, une chute de pression, qui, après que l'armature ait été arrachée de son élément de retenue, maintient cette armature, tant que l'écoulement du fluide est maintenu, à une course d'ouverture partielle réduite, correspondant à une section transversale de passage réduite.

7. Valve magnétique avec des coefficients de débit susceptibles d'être modifié, notamment valve magnétique destinée à être mise en oeuvre dans des systèmes anti-blocage (ABS), avec une grande section transversale de passage pour le freinage normal et une section transversale de passage réduite pour le fonctionnement ABS, avec une armature montée dans un boîtier de valve de façon à pouvoir être déplacée par une bobine de commande, avec un élément d'étanchéité déplacé par l'armature et associé à celle-ci, et un siège de valve fixe, valve magnétique caractérisée en ce que :

a) le fond (27) de l'armature est relié par l'intermédiaire d'au moins un passage à la zone d'admission (élément d'étanchéité 16, support 15 de l'élément d'étanchéité, corps de valve 17),

b) le guidage (12) de l'armature entoure cette armature (13) en s'y appliquant avec un jeu réduit, si bien que, du fait de l'effet d'écoulement du fluide à mettre en circulation (liquide de freinage), il se produit sur les faces axialement opposées l'une à l'autre de l'armature, une chute de pression, qui, après que l'armature ait été arrachée de son élément de retenue, maintient cette armature, tant que l'écoulement du fluide est maintenu, à une course d'ouverture partielle réduite correspondant à une section transversale de passage réduite.